**Europäisches Patentamt**

**European Patent Office**

**Office européen des brevets**

(11) Publication number: **0 247 028**
**B1**

(12) **EUROPEAN PATENT SPECIFICATION**

(45) Date of publication of patent specification: **05.04.89**

(21) Application number: **85904819.1**

(22) Date of filing: **25.09.85**

(86) International application number:
**PCT/FI85/00079**

(87) International publication number:
**WO 87/02108 09.04.87 Gazette 87/08**

(51) Int. Cl.⁴: **F 16 D 65/52** // F16D65/16

(54) **BRAKING DEVICE FOR A TRAILER.**

(43) Date of publication of application:
**02.12.87 Bulletin 87/49**

(45) Publication of the grant of the patent:
**05.04.89 Bulletin 89/14**

(84) Designated Contracting States:
**DE FR GB SE**

(56) References cited:
**DE-A-2 204 354**
**US-A-2 850 123**
**US-A-3 003 589**
**US-A-3 463 274**
**US-A-4 066 154**

(73) Proprietor: **UKKO-TUOTTEET KY**
**Lemminkäisentie 7**
**SF-05830 Hyvinkää (SE)**

(72) Inventor: **SIMONEN, Tenho Raimo Juhani**
**Lemminkäisentie 7**
**SF-05830 Hyvinkää (FI)**

(74) Representative: **Zipse + Habersack**
**Kemnatenstrasse 49**
**D-8000 München 19 (DE)**

## Description

The present invention concerns a braking device for a trailer, consisting of a frame and a brake actuation lever pivoted on it, a brake disc rotating with the hub of the wheel, and brake blocks pressed against the disc during braking, with a pushing rod movably attached by means of pivots to the brake actuation lever and to one of the brake blocks respectively, and with a check block preventing free movement of the rod in the direction of rotation of the brake disc during forward travel of the vehicle as presented e.g. by US—A—3.003.589.

The braking systems generally used in trailers almost exclusively employ mechanical drum brakes, which are simple in construction and permit easy implementation of brake boosting and automatic release at reversal. In many cases the trailer, e.g. a caravan, is almost as heavy as the car itself, but it still has only two wheels for braking. Under these circumstances, due to the high power needed for braking, drum brakes suffer from overheating and consequent reduction of braking power when the brake is repeatedly applied. Another drawback with drum brakes is that they need to be readjusted from time to time as the brake linings wear, which is done manually and in most cases only after the brakes have become incapable of braking. Because of the increased power demand, disc brakes are also used in trailers. Such brakes are often hydraulically powered and have no boosting. Hydraulic operation involves structural complexity and an increased need for maintenance and consequently high cost of the braking device. On the other hand, brake boosting is important, since only two wheels are available for braking. A method for readjustment of the brakes to compensate for wear is presented e.g. by the US patent 3,848,704, in which the position of the brake rod transmitting the braking power is automatically adjusted by means of ring-like adjustment plates moved as a pack on the rod, these plates being moved one by one over a shoulder on the rod as the wear of the braking surfaces reaches a certain degree. However, this solution is based on hydraulic transmission of the powder for pressing the brake blocks themselves and also for the adjustment of the rod position. In another known solution, automatic release of the brake during reversing has been arranged by providing the braking device, in addition to the braking cylinder itself, with a control valve to permit the flow of the hydraulic fluid only when the vehicle is moving forward and braking capacity is required. The control valve is mounted on a movable frame which, when the vehicle is reversed, turns around in the direction of rotation of the wheel, whereby the control valve shuts down the flow of the hydraulic fluid, thus preventing braking. This is in itself a workable solution, but it is also based on hydraulic operation, which, as stated above, has its drawbacks.

The object of the present invention is to eliminate the drawbacks mentioned and to provide a cheap and reliable braking device for trailers. The braking device of the invention is characterized in that the check block is attached to the brake actuation lever and is arranged in respect of the pushing rod in such a manner that, when the brake is applied, the pushing rod when pressed sideways as a result of friction between the brake block and the brake disc applies pressure against the check block, thus forcing the brake actuation lever to turn further and thereby increasing the braking power.

An advantageous embodiment of the invention is characterized in that the check block is placed between the brake block and the pivot of the pushing rod.

The solution presented by the invention has the advantage of providing a simple method of brake boosting as well as brake release at reversal. The pivots, levers and the check block are so positioned relative to each other that, when the brake is applied while the vehicle is travelling in the forward direction, brake boosting will function automatically. When the vehicle is being reversed, the brake blocks tend to move clear of the brake disc and no braking takes place.

Another embodiment of the braking device of the invention is characterized in that it incorporates a ratchet wheel rotatably mounted on the frame by means of an axle, the brake actuation lever being eccentrically pivoted on the ratchet wheel, said ratchet wheel consisting of an upper and a lower tooth disc, with two pairs of pawls pressed by springs against the toothed quadrants of the discs, one pair of pawls serving to rotate the ratchet wheel and the other pair to prevent backward rotation, the former pair being pivoted at one end on the brake block and the latter pair on the frame of the braking device. This arrangement provides the advantage of automatically compensating for the wear of the brake blocks.

Another advantageous embodiment of the braking device of the invention is characterized in that the teeth on the tooth discs are so positioned relative to the pawls that the lower one in a pair of pawls rests at the bottom of an indentation on the lower tooth disc when the upper one rests at the middle of an indentation on the upper tooth disc.

Another advantageous embodiment of the braking device of the invention is characterized in that the tooth discs are staggered relative to each other in such manner that the tip of a tooth on the lower disc is aligned with the middle point of an indentation on the upper disc.

Another advantageous embodiment of the braking device of the invention is characterized in that the length of one of the pawls in a pair exceeds that of the other one by an amount equal to half the distance between two successive teeth on a tooth disc.

Another advantageous embodiment of the braking device of the invention is characterized in that the pivot of the brake actuation lever is eccentrically positioned on the ratchet wheel in such manner that, as the brake blocks become thinner with wear, the brake actuation lever, carried by its pivot as the ratchet wheel is turned, moves closer to the brake disc.

An advantage common to all the embodiments mentioned above is that they permit fine adjustment of the brakes to compensate for the wear of the brake blocks. Even with a rough pitch of the teeth, adequate results will be achieved.

A further advantageous embodiment of the braking device of the invention is characterized in that each tooth disc has two separate toothed quadrants, one for turning the wheel, the other for preventing reverse rotation of the same, the two quadrants being eccentrically arranged relative to each other in such manner that the radial centre of the turning quadrant is on the pivot of the brake actuation lever, whereas the radial centre of the retaining quadrant coincides with the centre of the ratchet wheel axle. This arrangement ensures that the distance between the teeth and the pawls remains constant, thus offering the advantage of reduced wear and a smoother automatic adjustment of the brakes.

In the following, the invention is described in greater detail by the aid of an example, reference being made to the drawings attached, wherein:

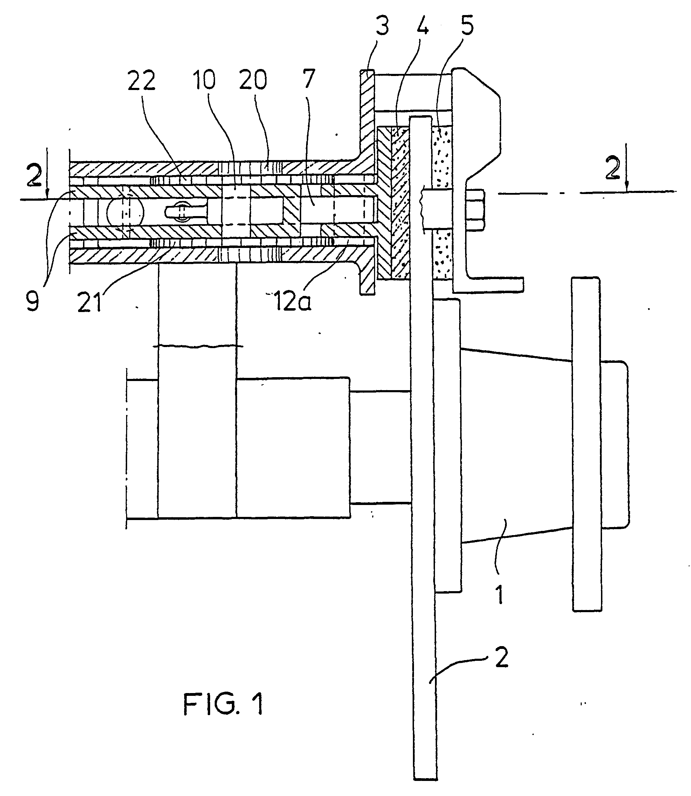

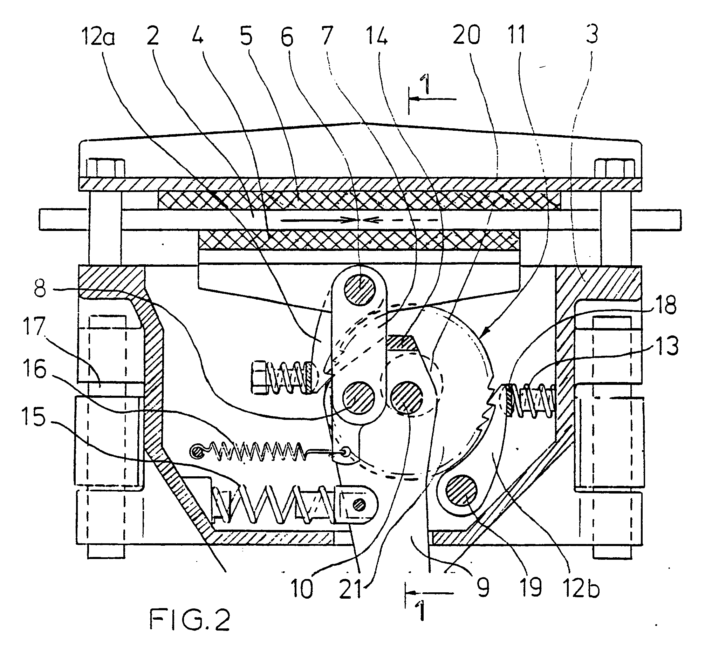

Fig. 1 presents the braking device in side view, mounted on the axle of a wheel on a vehicle and seen in section along the line 1—1 in Fig. 2 so as to show the ratchet wheel mechanism unsectioned;

Fig. 2 presents the same braking device in top view, seen in section along the line 2—2 in Fig. 1;

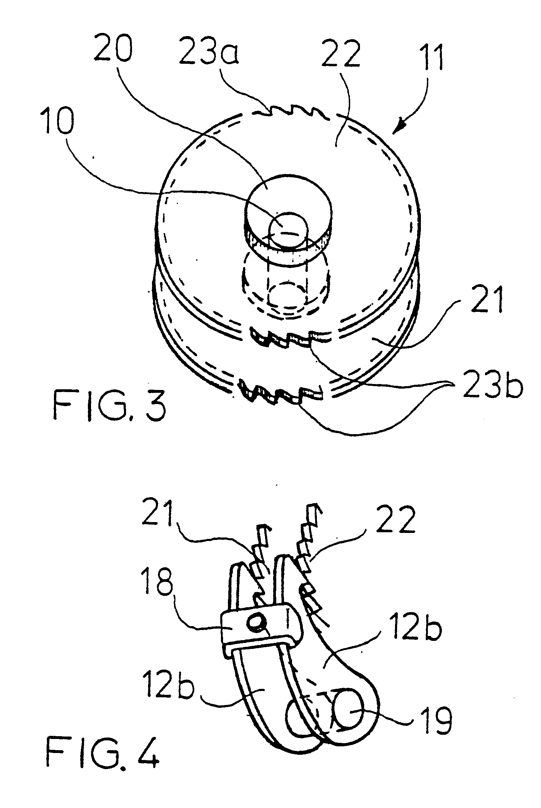

Fig. 3 presents the ratchet wheel mechanism; and

Fig. 4 presents a pair of pawls in engagement with the teeth on the ratchet wheel discs.

There are two brake blocks 4 and 5, placed on either side of the brake disc 2. The brake block 5 is fixed on the frame 3, which is mounted so as to be movable in the axial direction of its supporting tenons 17 to ensure a balanced distribution of the braking force applied on the brake disc via the brake blocks 4 and 5. The brake block 4 is attached at its middle to the pushing rod 7 by means of a pivot 6. When the brake actuation lever 9, part of which is visible in the figure, is pulled at e.g. by means of a wire cable, the lever will turn on its pivot 10, thereby moving the pushing rod 7 attached to it by means of the pivot 8 and thus pressing the brake block 4, pivoted on the other end of the rod 7, against the brake disc 2. Because of the friction, the brake block 4 now tends to move in the direction of rotation of the brake disc 2, so that when the vehicle is moving forward, i.e. in the direction indicated by the arrow in the figure, a force is exerted on the rod 7, pressing it sideways against the check block 14 and thus increasing the torsion of the brake actuation lever 9, thereby increasing the braking force. When the brake is released, the brake actuation lever 9 is returned to its rest position by means of a spring 15. When the vehicle is being reversed, the brake disc 2 will rotate in the opposite direction, i.e. the direction indicated by the arrow shown with a broken line. The brake block 4 is free to move in this direction because the pushing rod 7 can turn unobstructed until it reaches the limit of its range of movement. After reversal, the brake block 4 is returned to its normal position by a spring 16.

The wear of the brake blocks is compensated for by means of a ratchet wheel mechanism 11 employing an eccentric arrangement, actuating the trunnion 10 of the brake actuation lever 9. The tooth discs 21 and 22 of the ratchet wheel 11 are attached to the frame 3 by means of bearings at their centres 20, and the two discs are fixedly joined by the trunnion 10 of the brake actuation lever 9 located between the upper 22 and the lower 21 tooth disc. The trunnion 10 is eccentrically positioned relative to the ratchet wheel axle 20. Moreover, the tooth discs 21 and 22 are staggered relative to each other in such manner that the tip of a tooth on the lower disc 21 is aligned with the middle point of an indentation on the upper disc 22. There are two pairs of pawls 12, one for turning the ratchet wheel 11, the other for preventing it from turning in the reverse direction, the former pair 12a being pivoted on a trunnion 6 attached to the brake block and the latter pair 12b on a trunnion 19 attached to the frame 3, the two pairs of pawls being placed on opposite sides of the ratchet wheel 11. The two pawls in each pair 12a and 12b are connected to each other by a slat 18, to which a pressure is applied by a spring 13 pressing the pair of pawls against the toothed quadrants 23a and 23b of the ratchet wheel 11 in such manner that each pawl in the pair is able to function independently of the other one. For improved adjustment of the brakes, one of the pawls in each pair is longer than the other by an amount equal to half the distance between two successive teeth on a tooth disc 21, 22. With wear of the brake blocks, the brake actuation lever 9 will turn through a greater angular distance and at the same time, by means of the pawls 12a, it will turn the ratchet wheel 11 so that, when one or both of the brake blocks 4 and 5 are worn to a certain degree, one of the retaining pawls 12b will be able to engage another tooth on the quadrant 23b, with the result that the brake actuation lever 9, being pivoted on the ratchet wheel 11, is brought closer to the brake disc 2. The tooth discs 21 and 22 are not exactly round in form, the toothed quadrants 23a and 23b having slightly differing radial centres. The radial centre of the quadrant 23a, which engages with the pawls 12a turning the wheel, is on the trunnion 10 of the brake actuation lever 9, whereas the radial centre of the quadrant 23b, which engages with the retaining pawls 12b, attached to the frame 3 with bearings. With such a form of the toothed quadrants, the distance between the teeth and the pawls remains constant.

## Claims

1. Braking device for a trailer, consisting of a frame (3) and a brake actuation lever (9) pivoted on it, a brake disc (2) rotating with the hub (1) of the wheel, and brake blocks (4 and 5) pressed against the disc during braking, with a pushing rod (7) movably attached by means of pivots (6, 8) to the brake actuation lever (9) and to one of the brake blocks (4) respectively, and with a check block (14) preventing the free movement of the rod in the direction of rotation of the brake disc (2) during forward travel of the vehicle, characterized in that the check block (14) is attached to the brake actuation lever (9) and is arranged in respect of the pushing rod (7) in such a manner that, when the brake is applied, the pushing rod (7) when pressed sideways, as a result of friction between the brake block 4 and the brake disc (2), applies pressure against the check block (14), thus forcing the brake actuation lever to turn further and thereby increasing the braking power.

2. Braking device according to claim 1, characterized in that the check block (14) is placed between the brake block (4) and the pivot (8) of the pushing rod.

3. Braking device according to claim 1 or 2, characterized in that it incorporates a ratchet wheel (11) rotatably mounted on the frame (3) by means of an axle (20), the brake actuation lever (9) being eccentrically pivoted on the ratchet wheel (11), said ratchet wheel consisting of an upper tooth disc (22) and a lower tooth disc (21), with two pairs of pawls (12a and 12b) pressed by springs (13) against the toothed quadrants of the discs, one pair of pawls (12a) serving to rotate the ratchet wheel (11) and the other pair (12b) to prevent reverse rotation of the same, the former pair (12a) being pivoted at one end on the brake block (4) and the latter pair (12b) on the frame (3) of the braking device.

4. Braking device according to claim 1, 2 or 3, characterized in that the teeth on the tooth discs (21 and 22) are so positioned relative to the pawls (12a and 12b) that the lower one in a pair of pawls (12a or 12b) rests at the bottom of an indentation on the lower tooth disc (21) when the upper one rests at the middle of an indentation on the upper tooth disc (22).

5. Braking device according to claim 4, characterized in that the tooth discs (21 and 22) are staggered relative to each other in such manner that the tip of a tooth on the lower disc (21) is aligned with the middle point of an indentation on the upper disc (22).

6. Braking device according to claim 4, characterized in that one of the pawls in a pair (12a and 12b) is longer than the other by an amount equal to half the distance between two successive teeth on a tooth disc.

7. Braking device according to one of the above claims, characterized in that the eccentrical positioning of the pivot (10) of the brake actuation lever (9) on the ratchet wheel (11) is such that, as the brake blocks become thinner with wear, the brake actuation lever (9), carried by its (10) pivot as the ratchet wheel (11) is turned, will move closer to the brake disc (2).

8. Braking device according to one of the above claims, characterized in that each tooth disc (21 and 22) has two separate toothed quadrants, one (23a) for turning the wheel, the other (23b) for preventing reverse rotation of the same, the two quadrants being eccentrically arranged relative to each other in such manner that the radial centre of the turning quadrant (23a) is on the pivot (10) of the brake actuation lever (9) whereas the radial centre of the retaining quadrant (23b) coincides with the centre of the axle of the ratchet wheel (11).

## Patentansprüche

1. Bremsanordnung für einen Anhänger, bestehend aus einem Rahmen (3) und einem an ihm angelenkten Bremsbetätigungshebel (9), einer mit der Radnabe (1) drehenden Bremsscheibe (2), und aus Bremsblöcken (4 und 5), die beim Bremsen gegen die Scheibe gepreßt sind, mit einer Schubstange (7), die mittels Gelenkzapfen (6, 8) beweglich zwischen dem Bremsbetätigungshebel (9) und einem der Bremsblöcke (4) befestigt ist, und mit einem Anschlagblock (14), der die freie Bewegung der Stange in Drehrichtung der Bremsscheibe (2) bei der Vorwärtsfahrt des Fahrzeugs verhindert, dadurch gekennzeichnet, daß der Anschlagblock (14) an dem Bremsbetätigungshebel (9) angebracht und er bezüglich der Schubstange (7) in einer solchen Weise angeordnet ist, daß beim Bremsen die Schubstange (7), wenn sie infolge der Reibung zwischen dem Bremsblock (4) und der Bremsscheibe (2) seitwärts gedrückt wird, Druck ausübt gegen den Anschlagblock (14), wodurch der Bremsbetätigungshebel gezwungen wird, weiter zu drehen und dadurch die Bremskraft zu erhöben.

2. Bremsanordnung nach Anspruch 1, dadurch gekennzeichnet, daß der Anschlagblock (14) zwischen dem Bremsblock (4) und dem Gelenkbolzen (8) der Schubstange angeordnet ist.

3. Bremsanordnung nach Anspruch 1 oder 2, dadurch gekennzeichnet, daß sie ein mittels einer Achse (20) drehbar auf dem Rahmen (3) gelagertes Schaltrad (11) aufweist, daß der Bremsbetätigungshebel (9) exzentrisch an dem Schaltrad (11) angelenkt ist, daß das Schaltrad aus einer oberen Zahnscheibe (22) und aus einer unteren Zahnscheibe (21) besteht, wobei zwei Klinkenpaare (12a und 12b) mittels Federn (13) gegen die gezahnten Quadranten der Scheiben gedrückt sind, und ein Klinkenpaar (12a) dazu dient, das Schaltrad (11) zu drehen und das andere Paar (12b) eine entgegengesetzte Drehung desselben zu verhindern, und wobei das erste Paar (12a) an einem Ende an den Bremsblock (4) und das letztere Paar (12b) an den Rahmen (3) der Bremsanordnung angelenkt ist.

4. Bremsanordnung nach Anspruch 1, 2 oder 3, dadurch gekennzeichnet, daß die Zähne an den Zahnscheiben (21 und 22) so bezüglich der Klinken (12a und 12b) angeordnet sind, daß die untere in einem Klinkenpaar (12a oder 12b) am Boden einer Einzahnung an der unteren Zahnscheibe (21) ruht, wenn die obere im Mittelbereich einer Einzahnung an der oberen Zahnscheibe (22) ruht.

5. Bremsanordnung nach Anspruch 4, dadurch gekennzeichnet, daß die Zahnscheiben (21 und 22) so zueinander versetzt angeordnet sind, daß die Spitze eines Zahns an der unteren Scheibe (21) mit dem Mittelpunkt einer Einzahnung an der oberen Scheibe (22) ausgerichtet ist.

6. Bremsanordnung nach Anspruch 4, dadurch gekennzeichnet, daß eine der Klinken in einem Paar (12a und 12b) um einen Betrag gleich der Hälfte des Abstandes zwischen zwei aufeinanderfolgenden Zähnen an einer Zahnscheibe länger ist als die andere.

7. Bremsanordnung nach einem der obigen Ansprüche, dadurch gekennzeichnet, daß die exzentrische Anordnung des Gelenkzapfens (10) des Bremsbetätigungshebels (9) an dem Schaltrad (11) so ist, daß, wei die Bremsblöcke mit der Abnutzung dünner werden, der durch seinen Gelenkzapfen (10) getragene Bremsbetätigungshebel mit Drehen des Schaltrads (11) sich näher zur Bremsscheibe (2) bewegt.

8. Bremsanordnung einem der obigen Ansprüche, dadurch gekennzeichnet, daß jede Zahnscheibe (21 und 22) zwei getrennte, gezahnte Quadranten aufweist, einen (23a) zum Drehen des Rads, den anderen (23b) zum Verhindern einer entgegengesetzten Drehung desselben, wobei die zwei Quadranten exzentrisch relativ zueinander derart angeordnet sind, daß der radiale Mittelpunkt des drehenden Quadranten (23a) auf dem Gelenkzapfen (10) des Bremsbetätigungshebels (9) liegt, während der radiale Mittelpunkt des drehverhindernden Quadranten (23b) mit dem Mittelpunkt der Achse des Schaltrads (11) zusammenfällt.

**Revendications**

1. Dispositif de freinage de remorque, comprenant un cadre (3) et un levier de manoeuvre de frein (9) monté de façon pivotante sur le cadre, un disque de frein (2) qui tourne avec le moyeu (1) de la roue, et des blocs de frein (4 et 5) pressés contre le disque pendant le freinage, une tige de poussoir (7) étant reliée de façon mobile par des pivots (6, 8) au levier de manoeuvre de frein (9) et à l'un des blocs de frein (4) respectivement, et un bloc de réaction (14) empêchant le mouvement libre de la tige dans la direction de rotation du disque de frein (2) pendant le déplacement du véhicule vers l'avant, caractérisé en ce que le bloc de réaction (14) est fixé au levier de manoeuvre de frein (9) et est disposé par rapport à la tige de poussoir (7) d'une manière telle que, lorsqu'on actionne le frein, la tige de poussoir (7), lorsqu'elle est pressée latéralement du fait du frottement entre le bloc de frein (4) et le disque de frein (2), exerce une pression contre le bloc de réaction (14), ce qui force le levier de manoeuvre de frein à tourner davantage et augmente ainsi le puissance de freinage.

2. Dispositif de freinage suivant la revendication 1, caractérisé en ce que le bloc de réaction (14) est placé entre le bloc de frein (4) et le pivot (8) de la tige de poussoir.

3. Dispositif de freinage suivant la revendication 1 ou 2, caractérisé en ce qu'il comprend une roue à rochet (11) montée de façon tournante sur le cadre (3) au moyen d'un axe (20), le levier de manoeuvre de frein (9) étant monté de façon pivotante et excentrée sur la roue à rochet (11), ladite roue à rochet étant constituée d'un disque denté supérieur (22) et d'un disque denté inférieur (21), deux paires de cliquets (12a et 12b) étant pressées par des ressorts (13) contre les quadrants dentés des disques, une paire de cliquets (12a) servant à faire tourner la roue à rochet (11) et l'autre paire (12b) servant à empêcher la rotation inverse de la roue à rochet, la première paire (12a) étant montée de façon pivotante à une extrémité sur le bloc de frein (4) et l'autre paire (12b) étant montée de façon pivotante sur le cadre (3) du dispositif de freinage.

4. Dispositif de freinage suivant la revendication 1, 2 ou 3, caractérisé en ce que les dents des disques dentés (21 et 22) sont situées, par rapport aux cliquets (12a et 12b), de sorte que le cliquet inférieur d'une paire de cliquets (12a ou 12b) repose au fond d'une indentation du disque denté inférieur (21) lorsque le cliquet supérieur se trouve au milieu d'une indentation du disque denté supérieur (22).

5. Dispositif de freinage suivant la revendication 4, caractérisé en ce que les disques dentés (21 et 22) sont décalés l'un par rapport à l'autre d'une manière telle que la pointe d'une dent du disque inférieur (21) est alignée avec le point milieu d'une indentation du disque supérieur (22).

6. Dispositif de freinage suivant la revendication 4, caractérisé en ce qu'un des cliquets d'une paire (12a et 12b) est plus long que l'autre cliquet, d'une valeur égale à la moitié de la distance entre deux dents successives d'un disque denté.

7. Dispositif de freinage suivant l'une quelconque des revendications précédentes, caractérisé en ce que la position excentrée du pivot (10) du levier de manoeuvre de frein (9) sur la roue à rochet (11) est telle que, lorsque les blocs de frein s'amincissent du fait de l'usure, le levier de manoeuvre de frein (9), entraîné par son pivot (10) lorsque la roue à rochet (11) tourne, se rapproche du disque de frein (2).

8. Dispositif de freinage suivant l'une quelconque des revendications précédentes, caractérisé en ce que chaque disque denté (21 et 22) comporte deux quadrants dentés séparés, l'un (23a) pour faire tourner la roue, l'autre (23b) pour empêcher la rotation inverse de la roue, les deux quadrants étant excentrés l'un par rapport à l'autre d'une manière telle que le centre radial du quadrant de mise en rotation (23a) se trouve sur le pivot (10) du levier de manoeuvre de frein (9) tandis que le centre radial du quadrant de retenue (23b) coïncide avec le centre de l'axe de la roue à rochet (11).

EP  0 247 028  B1

FIG. 1

1

FIG.2

FIG. 3

FIG. 4